Europäisches Patentamt

European Patent Office

Office européen des brevets

(19)

(11) Veröffentlichungsnummer: **0 307 687**
**A1**

# (12) EUROPÄISCHE PATENTANMELDUNG

(21) Anmeldenummer: **88113938.0**

(22) Anmeldetag: **26.08.88**

(51) Int. Cl.4: **B60S 1/34 , F16B 3/00 , B29C 65/42**

(30) Priorität: **01.09.87 DE 3729104**

(43) Veröffentlichungstag der Anmeldung:
**22.03.89 Patentblatt 89/12**

(84) Benannte Vertragsstaaten:
**ES FR GB IT SE**

(71) Anmelder: **SWF Auto-Electric GmbH**
**Stuttgarter Strasse 119 Postfach 135**
**D-7120 Bietigheim-Bissingen(DE)**

(72) Erfinder: **Prohaska, Hans**
**Nelkenweg 44**
**D-7120 Bietigheim-Bissingen(DE)**

(54) **Verbindung zweier Elemente, insbesondere eines Rahmens einer Wischanlage mit einer Kraftfahrzeugkarosserie sowie Verfahren zur Verbindung dieser beiden Elemente.**

(57) Es wird eine Verbindung zwischen dem Rahmen einer Scheibenwischeranlage und der Karosserie eines Kraftfahrzeuges beschrieben, bei der zwischen einem Steckteil der Karosserie und einem dieses Steckteil umgebenden Aufnahmeteil am Rahmen der Wischeranlage ein Hohlraum gebildet ist, der durch einen aushärtenden Werkstoff ausgefüllt wird, der vorzugsweise formschlüssig die beiden zu verbindenden Elemente verriegelt. Eine solche Art der Verbindung hat im Vergleich zu bekannten Rastverbindungen eine bessere Formstabilität, wobei die Montage gegenüber den bekannten Schraubverbindungen wesentlich vereinfacht und voll automatisierbar ist.

Fig.1

EP 0 307 687 A1

## Verbindung zweier Elemente, insbesondere eines Rahmens einer Wischanlage mit einer Kraftfahrzeug-karosserie sowie Verfahren zur Verbindung dieser beiden Elemente

Die Erfindung bezieht sich auf eine Verbindung zweier Elemente, insbesondere eines Rahmens einer Wischanlage mit einer Kraftfahrzeugkarosserie gemäß den Merkmalen des Oberbegriffs des Anspruchs 1.

Der Rahmen einer Wischanlage wird bisher meist mittels einer Schraubverbindung an der Karosserie eines Kraftfahrzeuges befestigt. Dazu werden als zusätzliche Bauteile, nämlich eine Schraube oder eine Mutter benötigt, deren Montage sehr umständlich und zeitraubend ist. Andere Anbauteile eines Kraftfahrzeuges, beispielsweise die Leuchten, werden oftmals allein über eine Rastverbindung an der Karosserie gehalten. Zusätzliche Bauteile werden dabei nicht benötigt, doch hält eine solche Rastverbindung nur vergleichsweise geringen Kräften stand. Die bisher bekannten Verbindungstechniken mit derartigen Rastelementen sind zur Befestigung einer Wischanlage an einer Kraftfahrzeugkarosserie aus Stabilitätsgründen nicht geeignet.

Der vorliegenden Erfindung liegt daher die Aufgabe zugrunde, eine Verbindung zwischen zwei Elementen zu schaffen, die größeren Kräften standhält, aber dennoch möglichst ohne schlecht handhabbare Zusatzbauteile und damit vollautomatisch herstellbar ist.

Diese Aufgabe wird erfindungsgemäß mit den kennzeichnenden Merkmalen des Anspruchs 1 gelöst.

Die Erfindung beruht dabei wesentlich auf dem Gedanken, daß man die beiden Elemente formstabil miteinander verbinden kann, wenn man in einen zwischen den Teilen gebildeten Hohlraum einen aushärtbaren Werkstoff einfüllt. Ein solcher aushärtbarer Werkstoff kann wesentlich besser mittels eines Automaten zugeführt werden als beispielweise eine Schraube oder Mutter.

Vorteilhaft ist dabei, daß während der Aushärtdauer des in diese Hohlform eingefüllten Werkstoffes bereits weitere Montagevorgänge an dem Fahrzeug durchgeführt werden können, also die eigentliche Montagezeit zum Aufsetzen des Rahmens einer Wischeranlage und zum Einfüllen des Werkstoffes sehr kurz gehalten werden kann.

Prinzipiell könnte der Erfindungsgedanke in der Weise realisiert werden, daß ein zylindrisches Aufnahmeteil mit einer glatten Innenwand koaxial über ein zylindrisches Steckteil mit einer glatten Außenwand gestülpt wird und der Hohlraum zwischen den einander benachbarten Wänden von Steckteil und Aufnahmeteil mit dem Werkstoff ausgefüllt wird. Eine ausreichende Stabilität ist bei einer solchen Verbindung aber meist nicht gegeben, weshalb einer Ausführung mit den Merkmalen des Anspruchs 2 der Vorzug gegeben wird. Bei einer solchen verbesserten Ausführung wird gewissermaßen ein Formschluß zwischen dem augehärteten Werkstoff und dem Steckteil sowie ein Formschluß zwischen dem ausgehärteten Werkstoff und dem Aufnahmeteil geschaffen, so daß über diesen ausgehärteten Werkstoff die beiden Teile formschlüssig miteinander verriegelt sind.

Gemäß einer vorteilhaften Weiterbildung der Erfindung soll durch das Steckteil und das Aufnahmeteil ein Hohlraum abgegrenzt werden, der bis auf kleine Einfüllöcher vollständig geschlossen ist. Bei einer solchen Ausführung kann ma flüssige Werkstoffe mit einer verhältnismäßig langen Aushärtdauer verwenden und ist nicht auf die Verwendung zähflüssiger Werkstoffe beschränkt.

Prinzipiell kann man das Steckteil und/ oder das Aufnahmeteil einstückig mit dem zugehörigen Element ausbilden. Beispielsweise kann das Steckteil als zylindrischer Ansatz ausgebildet sein, der unmittelbar aus der Karosseriewand herausgeprägt ist. Man kann aber ebenso dieses Steckteil und/oder das Aufnahmeteil als separates Bauteil ausbilden und beispielsweise über ein Dämpfungsglied an dem zugehörigen Element aufhängen.

Die Erfindung bezieht sich außerdem auf ein Verfahren zur Verbindung zweier Elemente, dessen wesentlicher Gedanke darin besteht, daß man zunächst die beiden Elemente lagerichtig ineinander verschachtelt und den dabei gebildeten Hohlraum anschließend mit einem aushärtbaren Werkstoff ausfüllt. Bei einer Alternative wird auf das Steckteil und/ oder das Aufnahmeteil ein aushärtbarer Werkstoff, der schon in den plastischen Zustand übergegangen ist, aufgetragen und erst anschließend werden die beiden Elemente lagerichtig aneinandergefügt, wobei dieser Werkstoff dann den Hohlraum zwischen dem Steckteil und dem Aufnahmeteil ausfüllt.

Die Erfindung und deren vorteilhafte Ausgestaltungen werden nachstehend anhand der in der Zeichnung dargestellten Ausführungsbeispiele näher erläutert. Es zeigen :

Fig. 1 schematisch einen Teilschnitt durch den Verbindungsbereich bei einem ersten Ausführungsbeispiel,

Fig. 2 eine Ansicht in Pfeilrichtung P auf Fig. 1,

Fig. 3 die Einzelheit X in vergrößertem Maßstab,

Fig. 4 einen Teilschnitt bei einem anderen Ausführungsbeispiel,

Fig. 5 einen Teilschnitt bei einem dritten Ausführungsbeispiel,

Fig. 6 einen Teilschnitt durch ein viertes Ausführungsbeispiel,

Fig. 7 einen Teilschnitt durch ein fünftes Ausführungsbeispiel und

Fig. 8 einen Schnitt entlang der Schnittlinie S in Fig. 7.

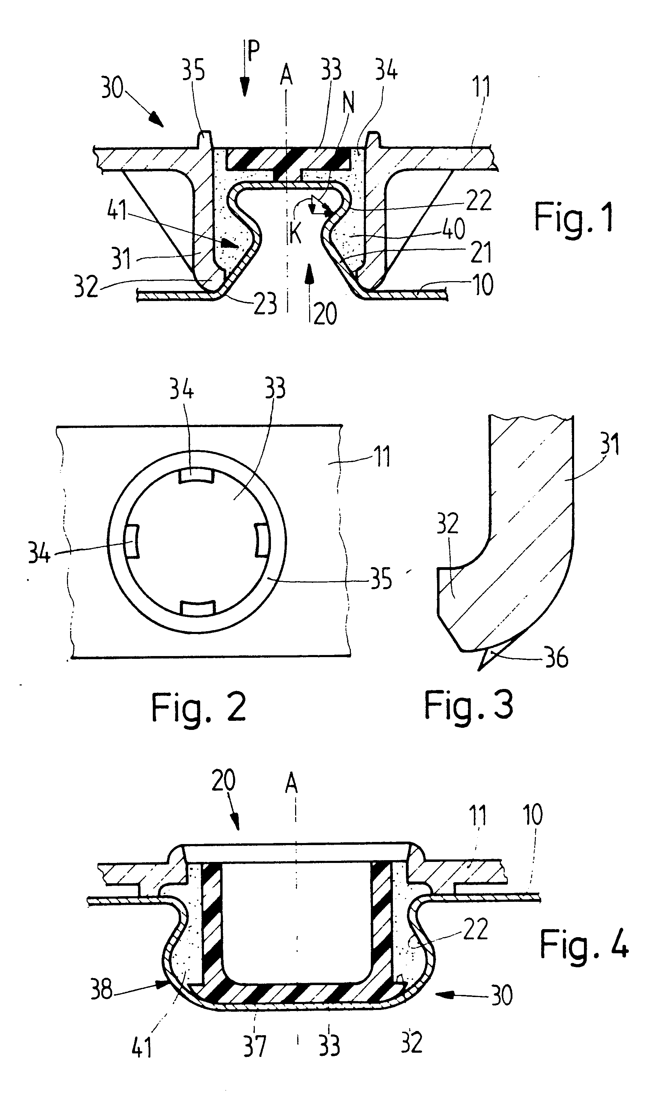

In Fig. 1 ist mit 10 die Karosserie eines Kraftfahrzeuges bezeichnet, an der ein Rahmen 11 einer Scheibenwischeranlage formstabil befestigt werden soll. An einem der beiden zu verbindenden Elemente, nämlich der Karosserie 10 ist ein insgesamt mit 20 bezeichnetes Steckteil ausgebildet, das als zylindrischer Ansatz unmittelbar aus dem Karosserieblech herausgeprägt ist, wobei die umlaufende Seitenwand 21 längs des Umfanges wenigstens abschnittsweise radial verformt ist. Dieses Steckteil 20 erhält dadurch einen pilzförmigen Querschnitt mit einem Flächenabschnitt 22, dessen Normale N eine Komponente K in Steck- oder Montagerichtung bzw. in Achsrichtung A des Steckteils 20 hat. Auf diese Weise wird eine Hinterschneidung gebildet, die eine formstabile Verriegelung zwischen den beiden zu verbindenden Elementen 10 und 11 sicherstellt, was später noch erläutert wird.

An dem anderen Element, nämlich dem Rahmen 11, ist einstückig ein insgesamt mit 30 bezeichnetes Aufnahmeteil angeformt. An dem Rahmen 11 steht eine zylindrische Wand 31 ab, an deren freiem Ende ein nach innen gerichteter ringflanschartiger Ansatz 32 vorgesehen ist. In den Boden 33 dieses Aufnahmeteils 30 sind Aussparungen 34 eingearbeitet, die als Einfüllöcher für einen mit 40 bezeichneten aushärtbaren Werkstoff dienen. Diese Einfüllöcher 34 liegen innerhalb eines als zylindrischen, gegebenfalls aber auch elliptischen oder anders gestalteten Füllansatzes 35, der von der der zylindrischen Wand 31 gegenüberliegenden Seite des Rahmens absteht. Dieser Füllansatz dient zum Ansetzen des den Werkstoff 40 abgebenden Füllstutzens, der in der Zeichnung jedoch nicht näher dargestellt ist.

Fig. 1 zeigt die beiden Elemente in der endgültigen, aneinander verriegelten Stellung. Aus Fig. 1 geht dabei insbesondere hervor, daß zwischen dem Aufnahmeteil 30 und dem Steckteil 20 ein Hohlraum 41 gebildet ist, der bis auf die kleinen Einfüllöcher 34 vollständig abgeschlossen ist. Der flanschartige Ansatz 32 am Aufnahmeteil 30 liegt nämlich flächig auf einem Randbereich 23 rings um das Steckteil 20 auf. Um eine einwandfreie Abdichtung zu erzielen, kann man eine Dichtlippe 36 vorsehen, die elastisch verformbar ist und die Toleranzen in Steckrichtung A ausgleicht. Diese Dichtlippe 36 kann einstückig unmittelbar an das Steckteil oder - wie in Fig. 3 gezeigt - an das Aufnahmeteil 30 angeformt sein, insbesondere wenn dieses Aufnahmeteil aus Kunststoff hergestellt ist.

Zur Montage wird der Rahmen 11 mit seinem Aufnahmeteil 30 zunächst über des Steckteil 20 an der Karosserie 10 gesteckt, wobei Mittel vorgesehen sein können, die die beiden Elemente in dieser Vormontagestellung mit geringer Rastkraft aneinanderhalten. Diese Rastmittel können unabhängig von der in Fig. 1 dargestellten Verbindung ausgebildet sein, doch sind auch Ausführungen denkbar, bei denen diese Rastmittel in den Verbindungsbereich intergriert sind. Beispielsweise könnte die geringe Elastizität der umlaufenden Seitenwand 31 des Aufnahmeteils 30 in Verbindung mit dem flanschartigen Ansatz 32 als Rastelement angesehen werden, welches den Rahmen auf dem Steckteil 20 hält, bis das zu montierende Kraftfahrzeug an die Bearbeitungsstation gelangt, an der der aushärtbare Werkstoff eingefüllt wird. Bei der Ausführung nach Fig. 1 ist also davon auszugehen, daß zunächst die beiden Elemente 10 und 11 so ineinandergefügt werden, daß ein Hohlraum 41 gebildet wird und daß erst anschließend in diesen nahezu vollständig geschlossenen Hohlraum der aushärtbare Werkstoff in flüssiger Form eingefüllt wird. Dies ist ohne jeden manuellen Eingriff möglich.

Nach dem Aushärten bildet der Werkstoff 40 eine Art Riegel zwischen den beiden Elementen 10 und 11. Dieser Werkstoff liegt an Hinterschneidungen an beiden Elementen derart an, daß die beiden Elemente nicht ohne endgültige Zerstörung der Verbindung voneinander gelöst werden können. Versucht man nämlich beispielsweise den Rahmen 11 entgegen der Pfeilrichtung P von der Karosserie 10 abzuziehen, so wird der flanschartige Ansatz 32, der gewissermaßen die Hinterschneidung am Aufnahmeteil bildet, gegen den Riegel, also den aushärtbaren Werkstoff gedrückt und versucht diesen mit vom Steckteil abzuziehen. Dies ist aber nicht möglich, weil mit einem anderen Abschnitt dieser Riegel an dem schräggestellten Flächenabschnitt 22 am Steckteil 20 anliegt. Der Kerngedanke der vorliegenden Erfindung kann also auch so formuliert werden, daß ein die beiden Elemente verbindender Riegel mittelbar in einer Werkzeugform geschaffen wird, die von den beiden zu verbindenden Teilen selbst geschaffen ist. Damit erübrigt sich nämlich jede manuelle Zufuhr eines zusätzlichen Verbindungselementes.

Fig. 4 stellt im wesentlichen eine Umkehrung des in Fig. 1 dargestellten Ausführungsbeispiels dar, weil nunmehr das Aufnahmeteil 30 an der Karosserie 10 ausgebildet ist, während das Steckteil 20 einstückig an den Rahmen 11 angeformt ist. Der Aufnahmetopf 37 wird unmittelbar aus dem Karosserieblech herausgeprägt, wobei dann die Seitenwand 38 durch ein Stauchen in Achsrichtung A seitlich ausgewölbt wird. Auch bei dem Ausführungsbeispiel nach Fig. 4 ist der Hohlraum 41 nahezu vollständig geschlossen. Bei manchen Kraftfahrzeugen wird die Wischeranlage an einem Teilbereich der Karosserie fixiert, der nur geringfügig gegenüber der Horizontalen abweicht. Bei einer solchen Anordnung kann also ohne Schwierigkeiten flüssiger, aushärtbarer Werkstoff in dieses topfförmiger Aufnahmeteil 30 eingefüllt werden, bevor in einem nächsten Arbeitsschritt das Steckteil am Rahmen 11 eingefügt wird. Dieses Verfahren mit einer umgekehrten Reihenfolge der Arbeitsschritte wird man vorzugsweise dann einsetzen, wenn man einen Werkstoff verwendet, der schon in den plastischen Zustand übergegangen ist.

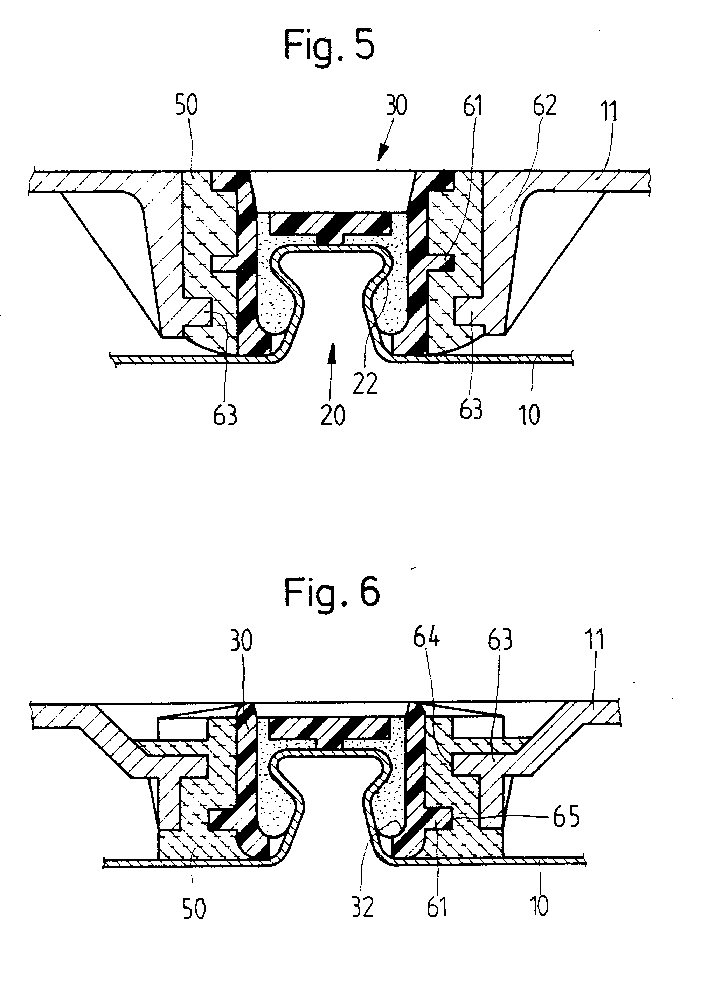

Bei den bisher beschriebenen Ausführungsbeispielen waren sowohl das Aufnahmeteil als auch das Steckteil einstückig mit dem zugehörigen Element ausgebildet. Die Fig. 5 bis 8 zeigen nun Ausführungsbeispiele, bei denen das Aufnahmeteil 30 als separates Bauteil ausgebildet ist und über ein Dämpfungsglied 50 mit dem Rahmen 11 verbunden ist. Aus der Zeichnung ist ersichtlich, daß das eigentliche Aufnahmeteil 30 bei der Ausführung nach Fig. 5 nicht wesentlich von dem in Fig. 1 dargestellten Aufnahmeteil abweicht. Es hat jedoch einen nach außen abstehenden Ringflansch 61, der in eine entsprechenden Nut am Dämpfungsglied hineingreift. Am Rahmen 11 befindet sich nun ein zylindrischer Wandabschnitt 62 mit einem nach innen gerichteten Ringflansch 63, der ebenfalls in eine entsprechende Aussparung am Dämpfungsglied 50 eingreift. Über das Dämpfungsglied 50 sind also das Aufnahmeelement 30 und der Rahmen 11 formschlüssig verriegelt, den dieses Dämpfungsglied 50 ist gewissermaßen in den Rahmen 11 eingeknüpft, während andererseits das eigentliche Haltelement in dieses Dämpfungsglied 50 eingeknüpft ist, so daß sich insoweit eine vormontierte Baueinheit ergibt, die nach zuvor geschilderten Verfahren an dem Steckteil 20 der Karosserie fixiert wird.

Während bei dem Ausführungsbeispiel nach Fig. 5 der Rahmen 11, das Haltelement 30 und das Dämpfungsglied 50 jeweils als separate Bauteile unabhängig voneinander hergestellt sein sollen, soll anhand von Fig. 6 ein vereinfachtes Herstellverfahren erläutert werden. Bei dieser Ausführungsform sollen nämlich das Aufnahmeteil 30 und der Rahmen 11 zunächst einstückig hergestellt werden, wobei eine Verbindung bestehen soll an den Kanten 64 und 65 der Ringflansche 61 bzw. 63. Die so hergestellte Baugruppe wird dann in ein Werkzeug eingelegt, und beim Einspritzen des thermoplastischen Gummis für das Dämpfungsglied 50 wird das Haltelement von Rahmen 11 getrennt.

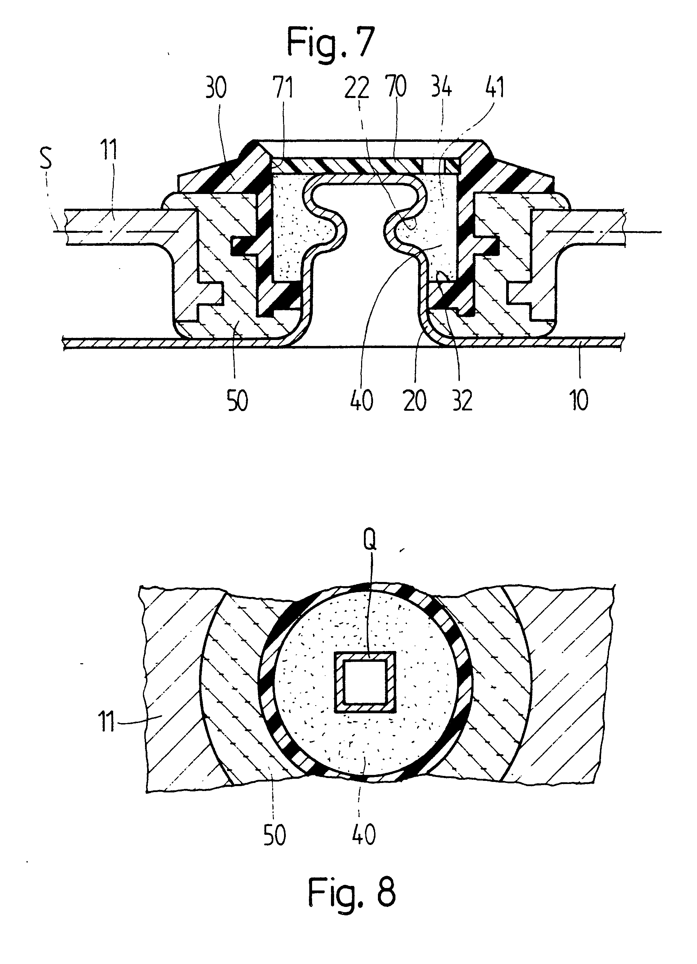

Die Ausführung nach Fig. 7 unterscheidet sich von den bisher beschriebenen Ausführungsbeispielen im wesentlichen durch eine andere Form des Steckteils 20, der als zylindrischer Zapfen aus dem Halteblech bzw. der Karosserie herausgeprägt ist und dann an vier Stellen der Mantelfläche radial eingedrückt ist, so daß in dieser Höhe der Zapfen etwa eine viereckigen Querschnitt Q aufweist. Außerdem ist aus Fig. 7 erkennbar, daß der Hohlraum 41 für den aushärtbaren Werkstoff durch ein Plättchen 70 mit einer kleinen Einfüllöffnung nach oben hin abgeschlossen ist. Dieses Plättchen 70 ist in eine umlaufende Nut 71 am Aufnahmeteil 30 verrastet. Das Plättchen 71 liegt dabei auf dem Kopf des Steckteils 20 auf, wodurch im Endeffekt die Lage des Rahmens 11 gegenüber der Karosserie vorgegeben ist. Dieses Plättchen könnte auch nachträglich, also nach dem Einfüllen des aushärtbaren Werkstoffes eingesetzt werden und - ohne Einfüllöffnung ausgestattet - den Hohlraum für den Werkstoff vollständig abschließen. Dieses Verfahren hat insbesondere bei Verwendung flüssiger Werkstoffe Vorteile.

Als aushärtbarer Werkstoff wird vorzugsweise ein Zweikomponentenharz verwendet, der nich notwendigerweise eine Verbindung mit einem der beiden zu verbindenden Elemente eingehen muß, da er in seiner ausgehärteten Form -wie bereits erläutert - einen Riegel zwischen den zu verbindenden Teilen bildet. Man kann aber selbstverständlich auch einen Werkstoff verwenden, der während der Aushärtung mit einem der beiden verbindenden Elemente eine innige Verbindung eingeht, weil dann gegebenenfalls auf die Hinterschneidung an diesem Element verzichtet werden kann.

Der wesentliche Vorteil der erfindungsgemäßen Verbindung besteht darin, daß eine vollautomatische Montage möglich ist, die Verbindung aber doch allen Ansprüchen hinsichtlich Festigkeit und Betriebszeit standhält. Korrosionsprobleme wie bei den bekannten Schraubverbindungen treten hier nicht auf. Außerdem ist es nicht notwendig, Durchbrüche in die Karosserie einzuarbeiten, so daß insoweit auch Dichtungsprobleme entfallen. Bei den Ausführungen nach den Fig. 5 bis 8 werden wegen des Dämpfungsgliedes Geräusche nicht übertragen, und diese Verbindungsart ist also in dem gewünschten Maße vibrationsfrei.

Selbstverständlich kann der Grundgedanke der Erfindung auch in einer von den in der Zeichnung dargestellten Ausführungsbeispielen abweichenden Form realisiert werden. Beispielsweise könnte als Steckteil 20 auch ein herkömmlicher Schraubbolzen verwendet werden, dessen Gewindegänge gewissermaßen die Hinterschneidungen bilden. Eine Lösung nach diesem Prinzip ist dadurch gekennzeichnet, daß das Steckteil 20 als separater Schraubbolzen ausgebildet ist, der mit einem ersten Gewindeabschnitt drehbar in einem Element

10, 11 gehalten ist und mit einem zweiten Gewindeabschnitt in den aushärtbaren Werkstoff 40 eintaucht. Bei einer solchen Ausführung ist auf einfache Weise auch eine Demontage möglich, weil der Schraubbolzen einen Muttergewindeabschnitt in dem aushärtenden Werkstoff schafft und später aus dem ausgehärteten Werkstoff herausgedreht werden kann. Man kann also ohne Schwierigkeiten einen Rahmen nach der vorliegenden Erfindung an mit derartigen Schrauben ausgerüsteten älteren Karosserien fixieren, wobei der Gewindebolzen starr oder auch drehbar an der Karosserie fixiert sein kann.

Der Grundgedanke der Erfindung ist auch keineswegs auf Scheibenwischeranlagen beschränkt, vielmehr können auch alle anderen Anbauteile, wie Leuchten und Scheinwerfer, Fensterhebeanlagen, Zierleisten, Auspuffanlagen nach dem Prinzip der vorliegenden Erfindung formstabil fixiert werden.

## Ansprüche

1. Verbindung zweier Elemente, insbesondere eines Rahmens einer Wischanlage mit einer Kraftfahrzeugkarosserie, mit einem Steckteil an dem einen Element und einem Aufnahmeteil an dem anderen Element, dadurch gekennzeichnet, daß zwischen dem Steckteil (20) und dem Aufnahmeteil (30) ein Hohlraum (41) vorhanden ist, der durch einen aushärtbaren Werkstoff (40) ausgefüllt ist.

2. Verbindung nach Anspruch 1, dadurch gekennzeichnet, daß an wenigstens einem Teil, vorzugsweise aber an beiden Teilen Hinterschneidungen (22, 32) derart ausgebildet sind, daß die Normale (N) der jeweils am aushärtbaren Werkstoff (40) anliegenden Flächenabschnitte (22) eine mit der Steck- oder Montagerichtung (A) übereinstimmende Komponente (K) aufweist.

3. Verbindung nach Anspruch 1 oder 2, dadurch gekennzeichnet, daß das Steckteil (20) und das Aufnahmeteil (30) einen bis auf kleine Einfüllöcher (34) vollständig geschlossenen Hohlraum (41) abgrenzen, wobei zur Abgrenzung diese Hohlraumes (41) ggf. zusätzlich ein Plättchen (70) an einem der Elemente fixierbar ist.

4. Verbindung nach Anspruch 3, dadurch gekennzeichnet, daß das eine Teil, vorzugsweise das Aufnahmeteil (30) einen nach innen gerichteten, ringflanschartigen Ansatz (32) aufweist, der auf dem das andere Element, vorzugsweise das Steckteil (20) umgebenden Randbereich (23) anliegt.

5. Verbindung nach Anspruch 3 oder 4, dadurch gekennzeichnet, daß an wenigstens einem Teil, vorzugsweise am Aufnahmeteil (30) eine elastisch verformbare Dichtlippe (36) vorgesehen ist, die die Toleranzen in Steck-oder Montagerichtung (A) ausgleicht.

6. Verbindung nach Anspruch 5, dadurch gekennzeichnet, daß die Dichtlippe (36) an dem ringflanschartigen Ansatz (32) vorgesehen ist und auf dem Randbereich (23) aufliegt.

7. Verbindung nach wenigstens einem der vorhergehenden Ansprüche, dadurch gekennzeichnet, daß das Steckteil (20) und das Aufnahmeteil (30) zur Vormontage mit geringer Rastkraft miteinander verrastbar sind.

8. Verbindung nach wenigstens einem der vorhergehenden Ansprüche, dadurch gekennzeichnet, daß das Steckteil (20) oder das Aufnahmeteil (30) einen Füllansatz (35) zum Ansetzen des den aushärtenden Werkstoff (40) abgebenden Füllstutzens aufweist.

9. Verbindung nach wenigstens einem der vorhergehenden Ansprüche, dadurch gekennzeichnet, daß das Steckteil (20) bzw. das Aufnahmeteil (30) einstückig an das zugehörige Element (10, 11) angeformt ist.

10. Verbindung nach wenigstens einem der vorhergehenden Ansprüche, dadurch gekennzeichnet, daß bei einem als Blechteil ausgebildeten Element (10) das Steckteil (20) als zylindrischer Ansatz ausgebildet ist, dessen umlaufende Seitenwand (21) zur Bildung der Hinterschneidungen (22) länges des Umfanges wenigstens abschnittsweise radial verformt ist.

11. Verbindung nach wenigstens einem der Ansprüche 1 bis 9, dadurch gekennzeichnet, daß bei einem als Blechteil ausgebildeten Element (10) das Aufnahmeteil (30) als ausgeprägter Aufnahmetopf ausgebildet ist, dessen umlaufende Seitenwand (38) vorzugsweise durch Stauchen in Achsrichtung seitlich ausgewölbt ist.

12. Verbindung nach wenigstens einem der Ansprüche 1 bis 8, dadurch gekennzeichnet, daß das Steckteil (20) bzw. Aufnahmeteil (30) als separates Bauteil vorzugsweise auf Kunststoff ausgebildet ist und über ein Dämpfungsglied (50) an dem zugehörigen Element (11) fixiert ist.

13. Verbindung nach Anspruch 12, dadurch gekennzeichnet, daß das Bauteil (20, 30) in das Dämpfungsglied (50) eingeknöpft ist und dieses Dämpfungsglied (50) selbst an dem Element (11) fixiert, vorzugsweise ebenfalls eingeknöpft ist.

14. Verbindung nach Anspruch 12, dadurch gekennzeichnet, daß das Steckteil (20) bzw. Aufnahmeteil (30) und das Element (10, 11) zunächst einstückig hergestellt sind und bei Einspritzen des aus einem thermoplastischen Gummi bestehenden Dämpfungsgliedes (50) voneinander getrennt werden.

15. Verbindung nach wenigstens einem der Ansprüche 1 bis 8, dadurch gekennzeichnet, daß das Steckteil (20) als separater Schraubbolzen ausgebildet ist, der mit einem ersten Gewindeabschnitt drehbar in einem Element (10, 11) gehalten ist und mit einem zweiten Gewindeabschnitt in den aushärtbaren Werkstoff (40) eintaucht.

16. Verbindung nach wenigstens einem der vorhergehenden Ansprüche, dadurch gekennzeichnet, daß ein Zweikomponentenharz als aushärtbarer Werkstoff (40) verwendet wird.

17. Verbindung nach wenigstens einem der vorhergehenden Ansprüche, dadurch gekennzeichnet, daß ein aushärtbarer Werkstoff (40) verwendet wird, der während des Aushärtens auch eine innige Verbindung zu wenigstens einem Teil, also dem Steckteil (20 und/ oder dem Aufnahmeteil (30) eingeht.

18. Verfahren zur Verbindung zweier Elemente, insbesondere nach einem der vorhergehenden Ansprüche, dadurch gekennzeichnet, daß zunächst das an einem Element vorgesehene Steckteil (20) in das an dem anderen Element vorgesehene Aufnahmeteil (30) eingesteckt wird und daß anschließend in den Hohlraum (41) zwischen Steckteil (20) und Aufnahmeteil (30) ein aushärtbarer Werkstoff (40) eingefüllt wird.

19. Verfahren zur Verbindung zweier Elemente, insbesondere nach wenigstens einem der Ansprüche 1 bis 16, dadurch gekennzeichnet, daß zunächst das Steckelement (20) und/ oder das Aufnahmeteil (30) mit einem aushärtbaren Werkstoff versehen wird und erst anschließend das Steckelement (20) in das Aufnahmeelement (30) eingeführt wird.

20. Verfahren nach Anspruch 18 oder 19, dadurch gekennzeichnet, daß der Hohlraum (41) für den aushärtbaren Werkstoff durch ein nachträglich fixiertes Plättchen weitgehend, ggf. auch vollständig abgeschlossen wird.

Fig. 1

Fig. 2

Fig. 3

Fig. 4

Fig. 5

Fig. 6

Fig. 7

Fig. 8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | CH-A- 490 618 (SCHENK)<br>* Spalte 3, Zeilen 8-11; Abbildung 3 *<br>--- | 1-7,9 | B 60 S 1/34<br>F 16 B 3/00<br>B 29 C 65/42 |
| X | US-A-3 916 502 (BAGNULO)<br>* Zusammenfassung; Abbildungen 1-4 *<br>--- | 1,2,3,5,7,9 | |
| A | FR-A-1 114 770 (CIRILLI)<br>--- | | |
| A | FR-A-1 391 945 (MANUFACTURE DE MACHINES DU HAUT-RHIN)<br>--- | | |
| A | US-A-3 992 846 (TANTLINGER)<br>--- | | |
| A | DE-A-2 206 588 (MODERN PLASTIC CO.)<br>----- | | |

RECHERCHIERTE SACHGEBIETE (Int. Cl.4)

B 29 C
B 60 S
F 16 B
F 16 L

Der vorliegende Recherchenbericht wurde für alle Patentansprüche erstellt

| Recherchenort | Abschlußdatum der Recherche | Prüfer |
|---|---|---|
| DEN HAAG | 15-12-1988 | DE SCHEPPER H.P.H. |